# EUROPEAN PATENT APPLICATION

(11) **EP 1 666 165 A1**
(43) Date of publication of application: **07.06.2006**
(21) Application number: 04292806.9
(22) Date of filing: 29.11.2004
(51) Int. Cl.: B05D 3/06, B60S 1/38

(54) **Method of applying and controlling the quantity of an anti-friction coating on a rubber profile of a wiper blade**

(71) Applicant: Valeo Systèmes d'Essuyage, 78321 La Verrière (FR)
(72) Inventor: Lösch, Manfred, 74321 Bietigheim-Bissingen (DE); Lemke,Michaela, 74385 Pleidelsheim (DE); Braun, Alexis, 63114 Coudes (FR)

(57) **Abstract**

A method of applying and controlling the quality of an anti-friction coating on a rubber profile of a wiper blade comprises the following steps:
- adding a minor amount of a fluorescent material sensitive to a high energy radiation to the coating;
- applying the coating on the rubber profile;
- exposing the coating to high energy radiation; and
- detecting the radiation emitted by the coating with a detector arrangement.

A rubber profile for a wiper blade has an anti-friction coating applied on its surface. The coating contains a minor amount of a fluorescent material sensitive to a high energy radiation.

## Description

The invention relates to a method of applying and controlling the quality of an anti-friction coating on a rubber profile of a wiper blade. The invention further relates to a rubber profile for a wiper blade.

Among the various shaping processes used in the automobile industry for the production of wiper blade rubber profiles extrusion processes are favourable in view of mass series production because of the continuous production sequence. After the shaping process the surfaces of the rubber profiles are treated to reduce the sliding friction. A preferred surface treatment is the application of a coating containing anti-friction constituents. In case of a liquid application solvent-based or water-based coatings are used. Following the surface treatment the extruded rubber profiles are cut into length before they are divided by a longitudinal cut into a finished rubber profile strip and a waste strip. The sharp edge of the rubber profile strip produced by the longitudinal cut represents the lip that later wipes across the wind shield of the vehicle. All of the above-mentioned process steps can be efficiently performed in an extrusion process line.

Regarding the application process it is to be understood that the coating cannot be applied in random quantity on the rubber profile surface for several reasons. In particular, the cutting of the rubber profiles may cause fracture of the coating. Thus, there is a need to control the quality of the applied coating because only a continuous, uniform coating ensures a smooth gliding of the wiper blade on the windshield and a ream-free cleaning. However, conventional methods of measuring the thickness of coatings as used with metal work pieces are not applicable to rubber materials. Other quality control options including optical or visual methods are either unsatisfactory, expensive or they are not suitable to be embedded in an extrusion process line, e.g. because the method is destructive to the coating. Accordingly, hitherto mass produced wiper blades have been tested with regard to wiping quality only after their final assembly, i.e. when the product already has a significantly increased value. Moreover, even if detected a bad coating cannot be touched up. Rather, the faulty rubber profile has to be discharged, rendering the productivity economically unsatisfactory.

A method of measuring the extent of coverage and the thickness of a water-based coating by incorporating an emulsion of an insoluble fluorescent compound and measuring the intensity of the fluorescence is generally known from US 5,650,455.

The method according to the invention provides a possibility to reliably control the quality of the anti-friction coating application process in the production of vehicle wiper blades at reasonable costs.

According to the invention the method comprises the following steps:
- adding a minor amount of a fluorescent material sensitive to a high energy radiation to the coating;
- applying the coating on the rubber profile;
- exposing the coating to high energy radiation; and
- detecting the radiation emitted by the coating with a detector arrangement.

Depending on the detected radiation conclusions regarding the quality of the applied coating can be drawn, especially regarding the integrity and thickness of the coating, without further preparation of the samples. The method according to the invention is non-destructive and has the advantage that all steps can be performed with available standard equipment and also rapidly enough to allow the method to be embedded in an extrusion process line without slowing down the speed of the process line.

The intensity of the emitted radiation is proportional to the quantity of the fluorescent material. Provided that the fluorescent material is homogeneously distributed in the coating it is readily possible to determine the thickness of the coating with the detector arrangement by measuring the intensity of the emitted radiation.

According to a more sophisticated approach of the invention the detector arrangement simultaneously analyses the spectrum of the emitted radiation. Thus, the quantity of other elements contained in the investigated sample can be determined at the same time.

If it is determined that a coating is unsatisfactory a signal produced by the detector arrangement can be used to indicate a failure to a control unit of the rubber profile production line. Preferably, the control unit in case of a failure indication automatically causes the current rubber profile to be sorted out so that the production process line needs no manual intervention.

In a preferred embodiment of the invention the radiation sensitive material contains titanium, preferably provided in the form of titanium dioxide (Ti02) particles contained in a water-based dispersion or in a powder. Such dispersions or powders are widely used in the field of colorants. TiO2 particles can be added in appropriate quantities without causing detrimental effects to the coating.

According to another embodiment of the invention the radiation sensitive material is barium.

The invention also provides a rubber profile for a wiper blade, the rubber profile having an anti-friction coating applied on its surface, characterized in that the coating contains a minor amount of a fluorescent material sensitive to a high energy radiation.

The quality of the coating of a rubber profile according to the invention can be examined as described above. Further details of the invention will become apparent from the following description and the accompanying drawings. In the drawings:
- Figure 1 shows a flow chart of an extrusion process line in the production of wiper blade rubber profiles;
- Figure 2 shows a detailed flow chart of the coating application process in accordance with the invention; and
- Figures 3 and 4 show charts of sample measurements.

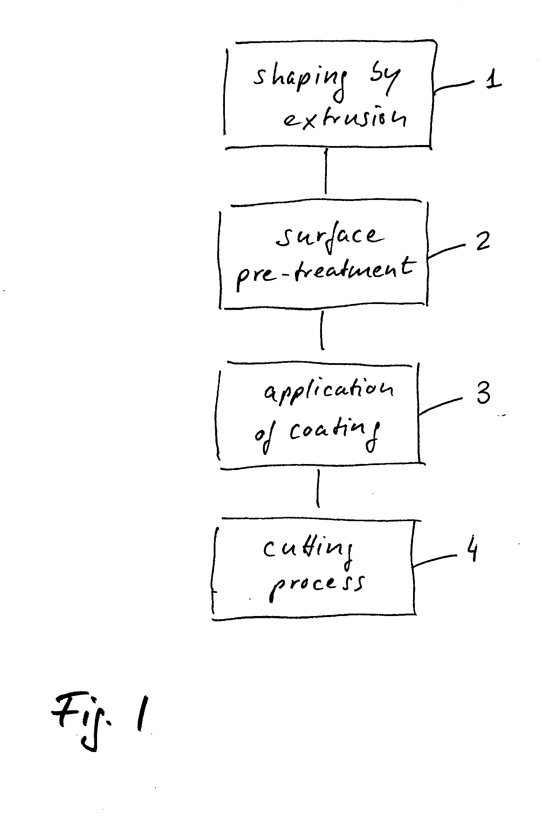

Figure 1 demonstrates how a rubber profile for a vehicle wiper blade is basically processed in an extrusion process line as initially described. The rubber profiles are preferably formed of a chlorinated or brominated natural rubber. Anti-friction coatings based on graphite, for example, are well-known and provide good sliding characteristics.

The flow chart of figure 1 shows blocks 1 to 4, representing steps of the method according to the invention. Block 1 represents the shaping of the rubber profile by means of extrusion. Block 1 is connected to block 2, block 2 representing a surface pre-treatment of the extruded rubber profile. After the step of block 2, the coating is applied to the extruded rubber profile. This step is shown by block 3. Finally, in block 4 that is connected to block 3, the rubber profile is put through a cutting process. This cutting process may comprise a transversal as well as a longitudinal cut.

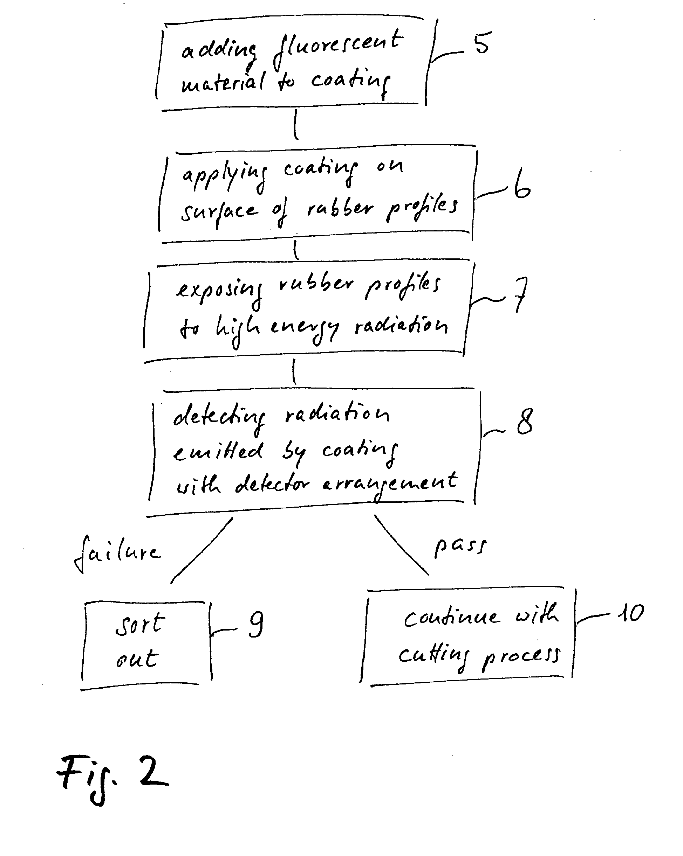

In Figure 2 the process of applying the anti-friction coating on the rubber profile substrates including a subsequent quality control process in accordance with the invention is shown in detail.

Before the coating is applied on the surface of the rubber profiles (e.g. by a spray gun) an indicator material is homogeneously added to the coating. This is shown in block 5. The added material is fluorescent, i.e. in response to high energy radiation such as ultra-violet radiation or X-rays the material emits radiation of lower energy. A suitable fluorescent element is titanium, which can be added to the coating in the form of titanium dioxide (TiO₂) particles contained in a water-based dispersion or in a powder. The concentration of TiO₂ in the coating is determined such that it does not effect the characteristics of the coating and may range from 0,01% to 5% by mass, the preferred range being 0,1% to 3%. Other suitable fluorescent materials and the criteria for their selection will be discussed later.

Block 6, which is connected to block 5, represents applying of the coating to the surface of the rubber profiles. After the coating is applied the rubber profiles are exposed to a high energy radiation adapted to the fluorescent material. This is shown in block 7. The emitted radiation is registered in a detector arrangement that is capable of determining the intensity of the emitted radiation. This is shown in block 8, which is connected to block 7. Since the intensity of the emitted radiation is proportional to the quantity of the fluorescent material the thickness of the coating can be easily calculated once a calibration measurement has been made. For a thorough investigation both the upper and lower sides of the rubber profiles are examined.

A determination step decides whether the quality of the rubber profile is satisfactory or not. If it is determined that the quality of a rubber profile coating is not satisfactory, i.e. it has not met the predefined requirements because it is too thin, not uniform or discontinuous, the detector arrangement indicates a failure to a control unit of the rubber profile production line. In this case the control unit automatically causes the faulty rubber profile to be sorted out without stopping the production process line. The sorting out is represented in block 9. Block 9 is connected to block 8. If the quality of the rubber profile is satisfactory, i.e. the rubber profile meets the predefined requirements, the rubber profile passes the determination step and proceeds to the cutting process. The cutting process is represented in block 10.

The detector arrangement may also contain a spectrum analyzer. Thus, it is rendered possible to determine at least a part of the elemental composition of the coating and also of the rubber profile substrate quantitatively. In particular, the content of chlorine or bromine in chlorinated or brominated rubber substrates can be verified. Further, the concentrations of other elements contained in the rubber substrates like sulphur, calcium and zinc can also be examined.

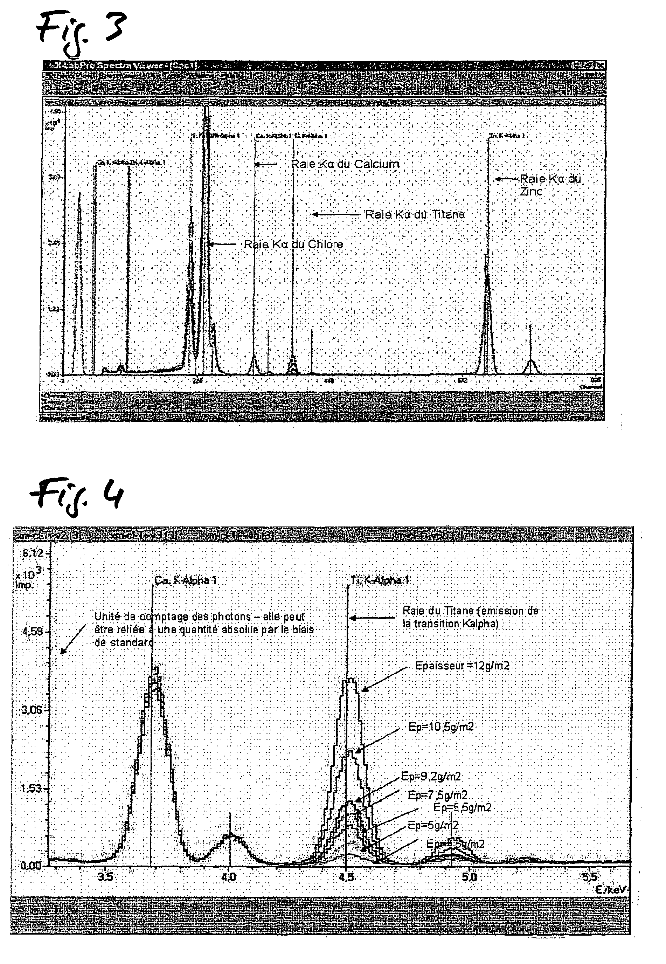

Figures 3 and 4 show charts of sample measurements. In the chart of Figure 3 different peaks can be seen representing the K_{α} lines of the elements contained in the examined coating, e.g. chlorine, calcium, titanium and zinc. In the chart of Figure 4 different graphs representing different titanium concentrations in the coating are shown. It is clearly visible that a higher concentration of titanium results in a higher peak of the measured K_{α} line of titanium.

The fluorescent element to be added should neither be contained in the rubber substrate nor in the coating. In case of a chlorinated rubber titanium is favourable because the wavelength of the radiation emitted by titanium and chlorine are close to each other and yet well distinguishable, enabling a facilitated simultaneous analysis of both elements in a single measurement. Accordingly, in case of a brominated rubber barium would be the preferred fluorescent element. It is generally advisable to select a fluorescent element the emitted wavelength of which is close to the emitted wavelength of an element the concentration of which is to be determined or verified in the investigated sample.

Alternatively, Lumogen® F dyes having good heat and light stability in amorphous resins may be used as a fluorescent material.
[Lumogen is a registered trademark of BASF].

## Claims

1. Method of applying and controlling the quality of an anti-friction coating on a rubber profile of a wiper blade, the method comprising the following steps:
- adding a minor amount of a fluorescent material sensitive to a high energy radiation to the coating;
- applying the coating to the rubber profile;
- exposing the coating to high energy radiation; and
- detecting the radiation emitted by the coating with a detector arrangement.

2. The method according to Claim 1, **characterized in that** the detector arrangement measures the intensity of the emitted radiation.

3. The method according to Claim 2, **characterized in that** the detector arrangement simultaneously analyzes the spectrum of the emitted radiation.

4. The method according to any of the preceding claims, **characterized in that** both the upper and lower sides of the rubber profiles are exposed to the radiation.

5. The method according to any of the preceding claims, **characterized in that** a signal generated by the detector arrangement is used to indicate a failure to a control unit of a rubber profile production line.

6. The method according to claim 5, **characterized in that** the control unit in case of a failure indication automatically causes the current rubber profile to be sorted out.

7. The method according to any of the preceding claims, **characterized in that** the radiation sensitive material contains titanium, preferably provided in the form of titanium dioxide particles contained in a water based dispersion or in a powder.

8. The method according to any of claims 1 to 6, **characterized in that** the radiation sensitive material is barium.

9. A rubber profile for a wiper blade, the rubber profile having an anti-friction coating applied on its surface, **characterized in that** the coating contains a minor amount of a fluorescent material sensitive to a high energy radiation.

10. The rubber profile according to claim 9, **characterized in that** the rubber profile is made of a chlorinated rubber and the radiation sensitive material contains titanium, preferably in the form of titanium dioxide particles.

11. The rubber profile according to claim 9, **characterized in that** the rubber profile is made of a brominated rubber and the radiation sensitive material contains barium.

12. The rubber profile according to claim 9, **characterized in that** the radiation sensitive material contains a Lumogen® F dye.
